# EUROPÄISCHE PATENTSCHRIFT

(11) **EP 2 176 931 B1**
(45) Veröffentlichungstag und Bekanntmachung des Hinweises auf die Patenterteilung: **23.10.2019**
(21) Anmeldenummer: 08759350.5
(22) Anmeldetag: 27.06.2008
(51) Int. Cl.: H02G 3/06, H02G 3/04

(54) **GITTERRINNE SOWIE GITTERRINNENVERBINDUNG UND VERFAHREN ZUR HERSTELLUNG EINER SOLCHEN GITTERRINNE**
WIRE MESH CHANNEL AND WIRE MESH CHANNEL CONNECTION AND METHOD FOR PRODUCING A WIRE MESH CHANNEL OF THIS TYPE
RIGOLE GRILLAGÉE ET RACCORD POUR RIGOLE GRILLAGÉE, AINSI QUE PROCÉDÉ DE FABRICATION DE CETTE RIGOLE GRILLAGÉE

(30) Priorität: 11.07.2007 DE 202007009658 U
(43) Veröffentlichungstag der Anmeldung: 21.04.2010
(73) Patentinhaber: Niedax GmbH & Co. KG, 53545 Linz/Rhein (DE)
(72) Erfinder: LANGEN, Friedhelm, 53489 Sinzig (DE); JUNGBLUTH, Frank, 53562 St. Katharinen (DE); PRASSEL, Jörg, 56588 Waldbreitbach (DE)
(74) Vertreter: Buse, Mentzel, Ludewig Patentanwaltskanzlei
(86) Internationale Anmeldenummer: PCT/EP2008/005261
(87) Internationale Veröffentlichungsnummer: WO 2009/007020

(56) Entgegenhaltungen:
- EP-A- 1 437 812
- EP-A- 1 793 464
- EP-A1- 0 822 364
- DE-C1- 19 831 145
- DE-U1-202007 009 658
- FR-A1- 2 894 726

## Beschreibung

Die vorliegende Erfindung betrifft eine Gitterrinne aus einem geformten Metalldrahtgitter, welches aus mehreren Längsdrähten und mehreren Querdrähten besteht, wobei sich innerhalb des geformten Metalldrahtgitters ein rinnenförmiger Auflageraum zum Halten und Führen von Kabeln, Leitungen oder Rohren ergibt. Gegenstand der vorliegenden Erfindung ist des Weiteren ein Verfahren zur Herstellung einer solchen Gitterrinne und eine Gitterrinnenverbindung bestehend aus den vorgenannten Gitterrinnen.

Gitterrinnen für Gitterrinnenanlagen bestehen üblicherweise aus einem Metalldrahtgitter, das zu einem U-förmigen Profil gebogen oder gekantet wurde, so dass die einzelnen Gitterrinnen aus parallel zueinander angeordneten und gegenseitig beabstandeten Längsdrähten bestehen, die mit U-förmigen Querdrähten verbunden, insbesondere an den Berührungsstellen verlötet oder verschweißt sind. Da die Gitterrinnen zum Halten und Führen von Kabeln, wie beispielsweise elektrischen Kabeln, Telefonkabeln, Datennetzkabeln, ähnlichen biegsamen Leitungen oder Rohren, für jeden Anwendungszweck einen anderen Verlauf nehmen sollen, werden Gitterrinnenanlagen in der Regel abschnittsweise, nämlich als Gitterrinnen hergestellt, die dann vor Ort miteinander zu einer Gitterrinnenanlage verbunden werden. Hierzu werden die Gitterrinnen auf Stoß verlegt und an den jeweiligen Stoß- oder Verbindungsstellen zusätzliche Verbindungselemente vorgesehen, die zum Teil aufwendig verschraubt werden. Die verschiedenen bekannten schraublosen Verbindungen verwenden in der Regel mehrere separate Verbindungsteile, die jeweils mindestens einen Quersteg der einen Gitterrinne mit mindestens einen Quersteg der anderen Gitterrinne, beispielsweise durch das Umfassen dieser Querstege, verbindet. So zeigt beispielsweise eine Gitterrinne gemäß EP 418 167 B1 einen Verbinder, der jeweils an den Seitenflächen der Gitterrinne zwischen zwei Längsdrähten angeordnet wird. Dieser plattenförmige Verbinder besitzt beabstandete biegbare Klammern, wobei mindestens eine Klammer jeweils einen Querdraht der einen Gitterrinne, wie auch mindestens einen Querdraht der anderen Gitterrinne umfasst. Durch die Verwendung von zwei solchen Verbindern werden die Gitterrinnen gehalten. Hierbei werden vorteilhafterweise die endseitigen Querdrähte als auch die jeweils im Abstand zu diesen Querdrähten benachbarten Querdrähte jeweils von einer Klammer des Verbindungsteils umfasst. Eine einfachere Verbindung zeigt die EP 905 843 B1. Hier werden ausschließlich die endseitigen Querdrähte der beiden zu verbindenden Gitterrinnen von dem Verbindungsteil umfasst. Nachteilig bei dieser Art der Verbindungsbildung ist, dass neben den Gitterrinnen zusätzliche Verbindungsteile bevorratet werden müssen, die zum Teil nur für bestimmte Gitterrinnen, nämlich für standardisierte Abstände der Querdrähte, eingesetzt werden können. Des Weiteren ist für das Verbiegen der Klammern ein Werkzeug notwendig.

Bei einer verbesserten Ausführung einer Gitterrinne gemäß EP 571 307 B1 werden keine zusätzlichen Verbinder, also keine separat zu lagernden, zu transportierenden Extrateile verwendet. Die Verbinder sind bereits mit einer Gitterrinne verbunden, hier in Form einer Lasche, die an der Gitterrinne angeschweißt ist und ein über die Gitterrinne hinausragendes Ende aufweist, das einen Einrasthaken besitzt, der einen Querdraht einer weiteren Gitterrinne, die auf Stoß zu dieser Gitterrinne angeordnet wird, umfassen kann, um eine Gitterrinnenanlage zu bilden. Eine solche Vorrichtung ist leichter zu handhaben und besitzt eine geringere Anzahl der miteinander zu verbindenden Teile, nämlich ausschließlich zwei Gitterrinnen für eine Verbindung. Nachteilig bei dieser Ausführung ist jedoch, dass die die Gitterrinne überragenden Enden der Verbindungslasche beim Transport und bei der Lagerung hinderlich sind.

Eine andere Vorrichtung gemäß EP 973 238 B1 zeigt ebenfalls eine schraublose Gitterrinnenverbindung unter Verwendung von ausschließlich zwei Gitterrinnen für eine Verbindung, in diesem Fall jedoch ohne die Verwendung eines Verbinders. Hier werden die Gitterrinnen in der Weise mit zwei unterschiedlich ausgebildeten Enden hergestellt, dass sich die Enden in Breite und Höhe unterscheiden, so dass beispielsweise ein verjüngtes Ende der einen Gitterrinne in ein unverändertes oder verbreitertes Ende einer anderen Gitterrinne eingesetzt werden kann und die Verbindung durch einfaches Verrasten erfolgt. Nachteilig bei dieser Ausführung ist, dass die Gitterrinnen nicht mehr auf Stoß zueinander angeordnet sind, sondern sich wesentlich überlappen müssen, was bei entsprechender Gitterlänge der Gitterrinne zu Kostennachteilen führt. Des Weiteren wird der Querschnitt des Auflageraumes im Bereich der überlappenden Enden der Gitterrinne wesentlich verkleinert oder aber die Gitterrinnenverbindung zeigt vergrößerte Außenmaße in diesem Bereich.

Das Dokument EP 0 822 364 A1 beschreibt eine Verbindung von Kabelkanalteilstücke mit Laschen. Die Montage der Laschen an den Kabelkanalteilstücken auf einer Baustelle erfordern eine technische Ausrüstung und benötigen Zeit. Darüber hinaus benötigt der Monteur auf der Baustelle einen einfachen Zugang zu den zwei Flügeln von jedem Kabelkanalteilstück, an dem die Laschen montiert werden müssen, was nicht immer gewährleistet ist.

Das Dokument DE 198 31 145 C1 beschreibt eine Gitterrinne mit den Merkmalen des Oberbegriffs von Anspruch 1.

Aufgabe der vorliegenden Erfindung ist es daher, eine einfache schraublose Gitterrinnenverbindung zu ermöglichen, die die Nachteile des Standes der Technik überwindet, insbesondere aus einfach herzustellenden Gitterrinnen aufgebaut ist.

Diese Aufgabe wird durch Gitterrinnen mit den Merkmalen des Anspruchs 1 möglich. Durch die Verwendung dieser Gitterrinnen kann eine erfindungsgemäße Gitterrinnenverbindung hergestellt werden, wie sie im Anspruch 6 beschrieben ist. Ein Verfahren zur Herstellung der Gitterrinne beschreibt Anspruch 7.

Die erfindungsgemäße Gitterrinne ist aus einem Metalldrahtgitter geformt. Dieses Metalldrahtgitter besitzt mehrere parallel zueinander angeordnete Längsdrähte und mehrere Querdrähte. Durch das Formen des Metalldrahtgitters besitzen die Querdrähte eine U-Form, eine L-Form, eine C-Form, eine Wannenform oder eine andere mögliche Form. Innerhalb des gebogenen Metalldrahtgitters ergibt sich ein rinnenförmiger Auflageraum, der bei der Verbindung mehrerer Gitterrinnen zu einer Gitterrinnenanlage zum Halten und Führen von Kabeln, Leitungen oder Rohren genutzt wird. Die erfindungsgemäße Gitterrinne besitzt zwei unterschiedlich ausgestaltete Enden. An dem einen Ende, dem vorderen Ende, ist ein Querdraht vorgesehen, beispielsweise ein U-förmig geformter Querdraht. Dieser dient, wie später dargelegt wird, zur Verbindungsbildung mit einer weiteren gleichgestalteten Gitterrinne. Endseitig am anderen Ende, dem hinteren Ende, ist eine Aufnahmerinne angeordnet. Diese Aufnahmerinne ist Teil der Gitterrinne, da eine stoffschlüssige Verbindung zwischen der Aufnahmerinne und dem geformten Metalldrahtgitter vorgesehen ist. Die Aufnahmerinne der Gitterrinne dient zur Aufnahme eines endseitigen Querdrahts einer weiteren Gitterrinne zur Bildung einer Gitterrinnenanlage. Diese Aufnahmerinne besteht aus einer durchgehenden Blechrinne oder aus mehreren Blechrinnenstücken.

Die Blechrinne wird mit dem ursprünglichen ebenen Metalldrahtgitter verbunden und beim Biegen des Metalldrahtgitters in eine bestimmte Form, beispielsweise in eine U-Form, mit umgeformt. Die Blechrinne kann auch in eine U-Form vorgeformt werden und mit dem U-förmig geformten Metalldrahtgitter verbunden werden. Das Metalldrahtgitter kann auch in andere Formen, wie oben beschrieben, gebogen werden. Entsprechend angepasst an die Form des Metalldrahtgitters erfolgt die Formung der Blechrinne zur Aufnahmerinne. Nachfolgend wird die Erfindung anhand einer U-förmigen Gitterrinne beschrieben.

Bei einer Ausführungsform der Erfindung zeigt die Öffnung des Aufnahmekanals einer U-förmigen Aufnahmerinne in Richtung des rinnenförmigen Auflageraums. In diesem Fall kann zur Herstellung einer Gitterrinnenverbindung eine weitere Gitterrinne mit einem endseitigen Querdraht von oben her in den Aufnahmekanal eingeführt werden. Dieser endseitige Querdraht befindet sich bei der Gitterrinne an der Außenseite, umgibt demzufolge die Längsdrähte.

In einem Ausführungsbeispiel ist ein Aufnahmekanal vorgesehen, dessen Öffnung nach außen, weg vom rinnenförmigen Auflageraum ausgerichtet ist. In diesem Fall wird der Aufnahmekanal von oben her auf den Querdraht der benachbarten Gitterrinne aufgeschoben. Dies wird möglich, wenn der endseitige Querdraht innenliegend in der Gitterrinne vorgesehen ist, d.h. die Längsdrähte außen an den Querdrähten angebracht sind.

Die Aufnahmerinne kann einen durchgängigen Aufnahmekanal besitzen, der vergleichbar mit dem Querdraht einen beispielsweise U-förmigen Verlauf besitzt, d.h. die ursprüngliche Blechrinne wird beim Verformen des Metalldrahtgitters zur U-förmigen Gitterrinne so umgeformt, dass sich drei unterschiedlich ausgerichtete Teilstücke der Aufnahmerinne ergeben, nämlich zwei senkrechte Teilstücke an den Seiten und ein mittleres horizontales Teilstück als Basis, wobei die Teilstücke miteinander verbunden sind. Um die Herstellung zu erleichtern, können in der Blechrinne an den vorgesehenen Abkantpunkten Kerben, Einschnitte oder Wandschwächungen vorgesehen werden, die das Umformen der Blechrinne ohne Beschädigung möglich machen.

Bei einer anderen Herstellungsvariante kann die Blechrinne in separaten Teilstücken an einer Querseite des Metalldrahtgitters angeschweißt werden, so dass die Teilstücke beim Formen der Gitterrinne nicht beeinträchtigt werden. Solche Teilstücke lassen sich natürlich auch an dem umgeformten Metalldrahtgitter durch Schweißen, Prägen oder eine andere Verbindungsart festlegen.

Zur Herstellung der Gitterrinne wird die Blechrinne oder Teilstücke der Blechrinne an einer Querseite mit dem ebenen oder umgeformten Metalldrahtgitter verbunden. Die Anbindung der Blechrinne kann an einem endseitigen Draht des Metalldrahtgitters erfolgen. In diesem Fall ergibt sich eine Gitterrinne, die am hinteren Ende eine Verbindung zwischen der U-förmigen Aufnahmerinne und einem endseitigen Querdraht besitzt.

Bei einer weiteren Ausführungsform lässt sich die Blechrinne auch mit den freien Enden der Drähte an einer Seite des Metalldrahtgitters verbinden. Wird ein solches Metalldrahtgitter zu einer Gitterrinne gebogen, befindet sich an dem entsprechenden Ende eine Aufnahmerinne, die mit den Enden der Längsdrähte verschweißt ist.

In der vorbeschriebenen Weise können auch einzelne Blechrinnenstücke mit dem ursprüngliche Metalldrahtgitter verbunden werden, so dass sich bei der fertigen Gitterrinne eine nicht durchgängige Aufnahmerinne ergibt, durch welche der endseitige Querdraht der benachbarten Gitterrinne nur abschnittsweise aufgenommen wird. Die Verbindung mit dem Metalldrahtgitter kann sowohl am endseitigen Querdraht als auch oder zusätzlich an den Enden der Längsdrähte erfolgen. Es wird bevorzugt jeweils mindestens ein Blechrinnenstück an jeder Seite des U-förmigen Metalldrahtgitterendes vorgesehen.

Bei einer bevorzugten Ausführungsform können die Teilstücke der Blechrinne jeweils mit einer Verbindungsplatte ausgerüstet sein, die Mittel zur Verbindungsbildung mit den endseitigen Längsdrähten aufweist, wobei vorzugsweise durch Verprägen oder Verpressen eine Verbindung zwischen der Verbindungsplatte und den Längsdrähten vorgenommen wird. Bei gleichem Abstand der Längsdrähte an den Seiten und dem Boden des Metalldrahtgitters können in vorteilhafter Weise gleiche Teilstücke der Blechrinne vorgesehen werden.

Wesentlich ist die starre Verbindung zwischen der Blechrinne oder den Teilstücken der Blechrinne und dem Metalldrahtgitter. Auf diese Weise können die erfindungsgemäßen Gitterrinnen ohne Verwendung eines zusätzlichen Verbinders zu einer Gitterrinnenanlage verbunden werden. Eine solche erfindungsgemäß zusammengesetzte Gitterrinnenanlage ist genauso stabil wie eine geschraubte Gitterrinnenanlage. Ein weiterer Vorteil der erfindungsgemäßen Gitterrinnenanlage besteht zudem darin, dass die Gitterrinnen gut elektrisch leitend miteinander in der Gitterrinnenanlage verbunden sind, da durch die Blechrinne oder die Teilstücke der Blechrinne ausreichend Kontaktfläche zum Übertragen von Kurzschlussströmen vorhanden ist. Die erfindungsgemäße Gitterrinne ist einfach herzustellen. Es ist lediglich zusätzlich eine Blechrinne oder Teilstücke einer Blechrinne am Metalldrahtgitter vorzusehen und da die Blechrinne zusammen mit dem Metalldrahtgitter umformbar ist, sind keine weiteren Herstellungsschritte notwendig. Der Transport und die Lagerung der Gitterrinne erfordert keinen zusätzlichen Platz gegenüber einer Gitterrinne ohne Aufnahmerinne.

Eine Gitterrinnenanlage kann in einfacher Weise aus diesen Gitterrinnen gebildet werden, indem eine Gitterrinne mit seinem vorderen Ende von oben auf das hintere Ende einer zweiten gleichen Gitterrinne aufgesetzt wird, bis der endseitige Querdraht der einen Gitterrinne in der Aufnahmerinne der anderen Gitterrinne formschlüssig und/oder kraftschlüssig aufgenommen ist. Die erfindungsgemäße Gitterrinnenverbindung ermöglicht damit eine einfache Herstellung einer Gitterrinnenanlage vor Ort. Ohne Verwendung von Verbindungsteilen können die einzelnen Gitterrinnen endseitig zusammengefügt werden. Für das Halten und Führen der Kabel, Leitungen oder Rohre steht die gesamte Längenausdehnung der Gitterrinnen zur Verfügung, es erfolgt keine Überlappung der gitterförmigen Bereiche. Der Querschnitt des Auflageraumes der Gitterrinnen einerseits und der entstehenden Gitterrinnenanlage andererseits sind wie auch deren Außenmaße durch die Verbindungsbildung unverändert geblieben.

Für eine einfachere Verbindungsbildung hat es sich als vorteilhaft herausgestellt, die den Aufnahmekanal begrenzenden Schenkel unterschiedlich zu dimensionieren. Der Aufnahmekanal weist einen U-förmigen Querschnitt auf und besitzt zwei im Wesentlichen parallel zueinander verlaufende Schenkel, wobei der gitterrinnenseitige Schenkel zur Verschweißung mit dem Gitterrinne dient und der gegenüberliegende Schenkel in der Regel etwas kürzer dimensioniert ist, um die Verbindungsbildung mit der benachbarten Gitterrinne zu erleichtern. An diesem außenseitigen Schenkel werden vorzugsweise auch Ausnehmungen vorgesehen und zwar an den Stellen, wo bei der fertigen Gitterrinnenverbindung die Aufnahmerinne auf Längsdrähte trifft. Auf diese Weise kann der Aufnahmekanal recht tief sein und den Querdraht der benachbarten Gitterrinne in seinem vollen Umfang in sich aufnehmen.

Bei einer weiteren Ausführungsform lässt sich eine erfindungsgemäße Gitterrinnenverbindung auch mit Gitterrinnen erzielen, die unterschiedlich ausgestaltet sind, wenn beispielsweise ein Gitterrinne jeweils endseitig Aufnahmerillen und ein Gitterrinne jeweils endseitig Querdrähte besitzt. In diesem Fall werden abwechselnd die vorgenannten Gitterrinnen zur Bildung einer Gitterrinnenanlage verwendet. In diesem Fall kann eine Gitterrinne mit zwei Aufnahmerinnen mit bekannten und möglicherweise noch als Vorrat vorhandenen Gitterrinnen erfindungsgemäße Gitterrinnenverbindungen bilden.

Die Erfindung wird nachfolgend an verschiedenen Ausführungsbeispielen an Hand der Zeichnungen näher erläutert. Im Einzelnen zeigen:
- Fig. 1: eine Gitterrinnenverbindung in perspektivischer Ansicht,
- Fig. 2: die Einzelteile einer Gitterrinnenverbindung in perspektivischer Ansicht,
- Fig. 3: zwei Gitterrinnen vor der Verbindungsbildung in perspektivischer Ansicht,
- Fig. 4: eine Aufnahmerinne in perspektivischer Ansicht,
- Fig. 5: eine Schnittdarstellung des Verbindungsbereichs der Gitterrinnenverbindung gemäß Fig. 1,
- Fig. 6: Einzelteile einer weiteren Gitterrinnenverbindung in perspektivischer Ansicht,
- Fig. 7: Einzelteile einer weiteren Gitterrinnenverbindung in perspektivischer Ansicht,
- Fig. 8: Einzelteile einer weiteren Gitterrinnenverbindung in perspektivischer Ansicht.
Die folgenden Ausführungsbeispiele betreffen nicht die beanspruchte Erfindung.
- Fig. 9a: eine Aufnahmerinne in perspektivischer Ansicht,
- Fig. 9b: ein vergrößerter Ausschnitt von Fig. 9a
- Fig. 10a: eine Aufnahmerinne in perspektivischer Ansicht,
- Fig. 10b: ein vergrößerter Ausschnitt von Fig. 10a.

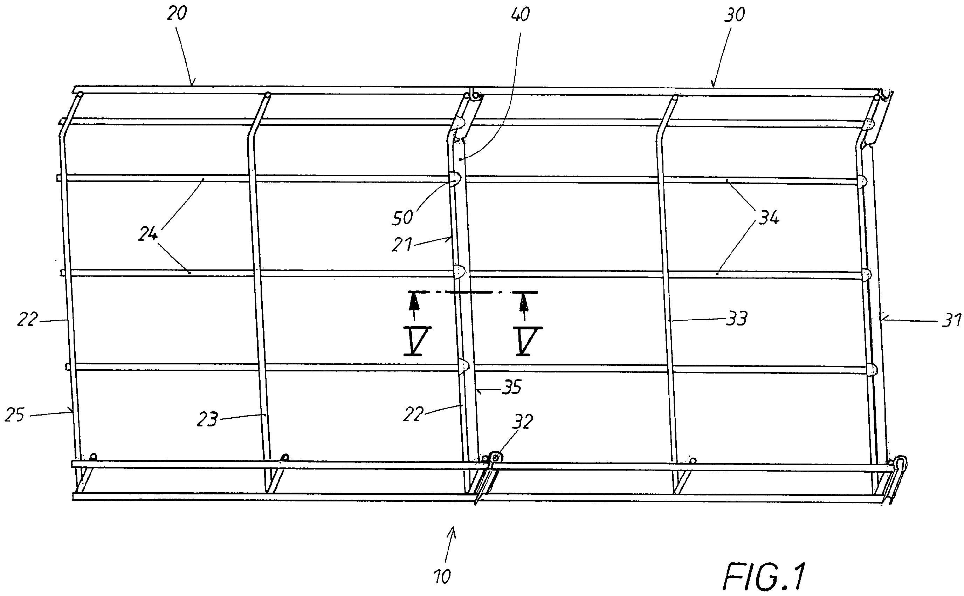

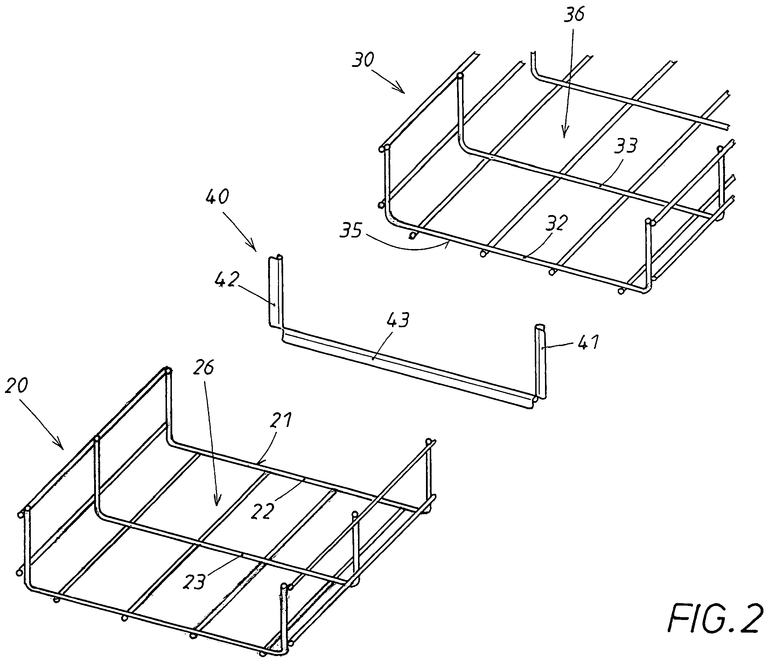

Fig. 1 zeigt eine Gitterrinnenverbindung 10 aus zwei Gitterrinnen 20 und 30. Die Gitterrinnen 20 und 30 sind gleich gestaltet. Beide Gitterrinnen 20, 30 besitzen parallel verlaufende, beabstandete Längsdrähte 24, 34. Diese Längsdrähte 24, 34 sind mit U-förmigen Querdrähten 22, 23 bzw. 32, 33 verbunden. Die Längsdrähte 24, 34 sind in diesem Fall an der Außenseite der U-förmigen Querdrähte 22, 23 bzw. 32, 33 angeordnet. Wie aus Fig. 2 zu ersehen, ergibt sich innerhalb der Gitterrinnen 20, 30 ein Auflageraum 26, 36, der nach Erstellung einer Gitterrinnenanlage zum Halten und Führen von Kabeln, Leitungen und/ oder Rohren dient. Hierzu werden insbesondere noch weitere gleich gestaltete Gitterrinnen jeweils endseitig mit den Gitterrinnen 20, 30 verbunden.

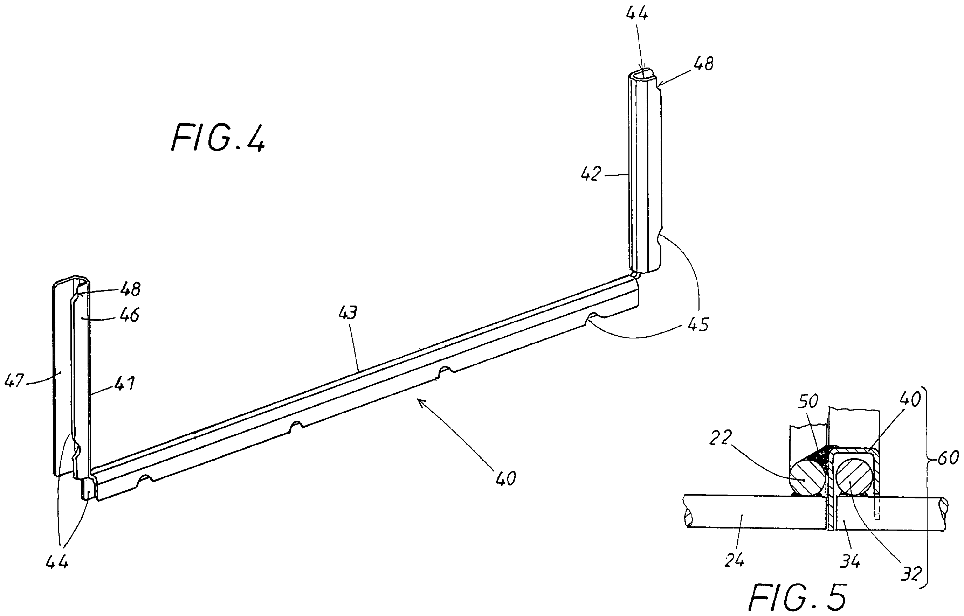

Die beiden in diesem Fall gleich gestalteten Gitterrinnen 20, 30 weisen ein vorderes Ende 25 bzw. 35 auf. An diesem vorderen Ende 25 bzw. 35 ist endseitig ein Querdraht 22 bzw. 32 angeordnet. Dieser dient der Verbindungsbildung mit dem nächsten benachbarten Gitterrinne, d.h. der endseitige Querdraht 32 dient zur Verbindung der Gitterrinne 30 mit der Gitterrinne 20. Wie besser aus Fig. 5 zu erkennen ist, wird dieser Querdraht 32 von einer Aufnahmerinne 40 gehalten. Diese Aufnahmerinne 40 ist einstückig mit der Gitterrinne 20 verbunden. In diesem Ausführungsbeispiel besteht eine Schweißverbindung 50 zwischen der Aufnahmerinne 40 und dem endseitigen Querdraht 22 der Gitterrinne 20. Die Fig. 1 zeigt mehrere Schweißpunkte dieser Schweißverbindung 50.

Die Aufnahmerinne 40 ist, wie besser aus den Fig. 2 oder 4 zu ersehen, in diesem Beispiel U-förmig gestaltet. Um bei der Herstellung einer Gitterrinnenverbindung 10 möglichst wenig und gut handhabbare Bauteile verwenden zu können, wird die Aufnahmerinne 40 einstückig mit einer Gitterrinne ausgebildet. Wie in Fig. 1 dargestellt, ist es möglich, die Aufnahmerinne 40 am vorderen Ende 21 der Gitterrinne 20 vorzusehen, insbesondere anzuschweißen, so dass die U-förmige Aufnahmerinne 40 unmittelbar benachbart zum endseitigen Querdraht 22 an der Gitterrinne 20 angeordnet ist. Das hintere Ende 25 der Gitterrinne 20 besitzt ebenfalls einen endseitigen Querdraht 22, der wiederum in eine Aufnahmerinne der nächsten Gitterrinne eingreifen kann. Die Gitterrinne 30 besitzt ebenfalls am hinteren Ende 31 eine Aufnahmerinne 40 für eine weitere anschließbare Gitterrinne. In diesem Ausführungsbeispiel von Fig. 1 sind die Gitterrinnen 20, 30 gleich gestaltet. Beide Gitterrinnen 20, 30 besitzen unterschiedlich ausgebildete Enden 21, 25 bzw. 31, 35, wobei an einem vorderen Ende 21, 31 die Aufnahmerinne 40 angeordnet ist.

In der Fig. 2 ist die Aufnahmerinne 40 bereits U-förmig gestaltet, nämlich aus zwei senkrechten Schenkeln 41, 42 und aus einer Basis 43. Diese vorgefertigte Aufnahmerinne 40 wird zur Herstellung der erfindungsgemäßen Gitterrinne 20 mit dem hinteren Ende 21 verbunden, beispielsweise angelötet oder angeschweißt. Eine vorteilhaftere Möglichkeit der Herstellung besteht darin, das Abkanten zur Herstellung der U-förmigen Aufnahmerinne 40 zusammen mit dem Umbiegen des Metallgitters vorzunehmen, dies bedeutet, dass ein ebenes Metalldrahtgitter aus Längs- und Querdrähten an einer Querseite mit einer Blechrinne verbunden wird. Beim Biegen des Metallgitters in eine U-Form ergibt sich ein rinnenförmiger Auflageraum 26. Bei diesem Biegen wird gleichzeitig auch die Aufnahmerinne 40 umgeformt. Damit die Blechrinne an den Abkantpunkten nicht aufreißt oder sich der Aufnahmekanal 44 verschließt, sind an den vorgesehenen Abkantstellen Einschnitte, Einkerbungen oder Wandschwächung in der Blechrinne vorgesehen. Eine solche Herstellung aus einem Metalldrahtgitter und einer Blechrinne ist eine sehr einfache Herstellung einer erfindungsgemäßen unmittelbar zur Verbindungsbildung geeigneten Gitterrinne 20. Das Gitterrinne 30 wird in gleicher Weise hergestellt.

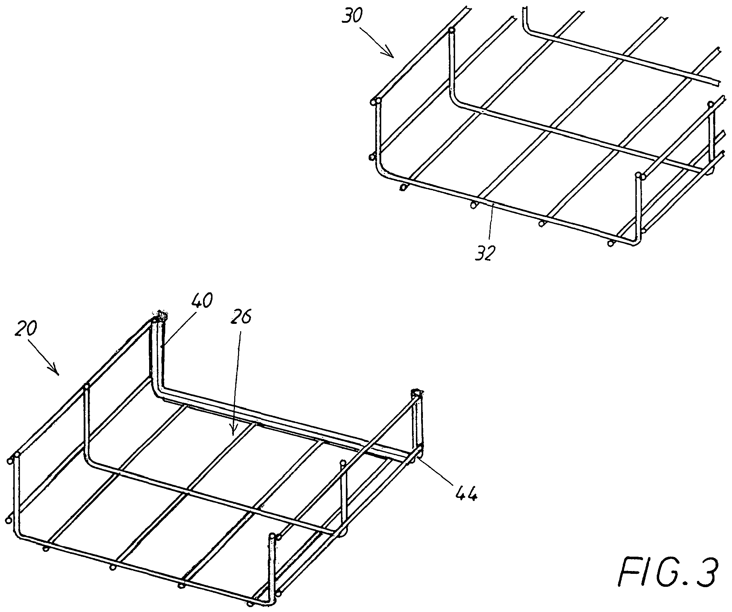

Fig. 3 zeigt die fertige erfindungsgemäße Gitterrinne 20 mit der einstückig verbundenen Aufnahmerinne 40. Dieses Gitterrinne 20 besitzt eine nach außen gerichtete, vom Auflageraum 26 weggerichtete Öffnung des Aufnahmekanals 44, siehe hierzu auch Fig. 4. In einem solchen Aufnahmekanal 44 der Aufnahmerinne 40 kann ein endseitiger Querdraht 32 der Gitterrinne 30 eingreifen. Dieser Querdraht 32 der Gitterrinne 30 ist, wie die Querdrähte 22, 23 des Gitterrinne 20 an der Innenseite der Gitterrinne 30 angeordnet, d.h. die Längsdrähte 24 bzw. 34 befinden sich an der Außenseite. Eine Verbindungsbildung kann durch ein einfaches Aufschnappen oder Einrasten erfolgen, indem der U-förmige Querdraht 32 von unten in den Aufnahmekanal 44 der Aufnahmerinne 40 eingeschoben wird, bis der Querdraht 32 vollständig im Aufnahmekanal 40 aufgenommen ist, wie in Fig. 5 gezeigt. In gleicher Weise kann auch die Gitterrinne 20 mit der Aufnahmerinne 40 von oben her senkrecht auf die Gitterrinne 30 aufgesetzt werden. Es ergibt sich eine Formschlussverbindung 60 zwischen dem U-förmigen Querdraht 32 der Gitterrinne 30 und der Aufnahmerinne 40 der Gitterrinne 20. Je nach Ausgestaltung des Aufnahmekanals 44 wird der Querdraht 32 formschlüssig und/oder kraftschlüssig im Aufnahmekanal 44 gehalten. Fig. 5 zeigt einen recht tiefen Aufnahmekanal 44. Die beiden Schenkel 46, 47, die den Aufnahmekanal 44 begrenzen, besitzen eine größere Länge als zur vollständigen Aufnahme des Querdrahts 32 notwendig wäre. Da dieser Querdraht 32 mit mehreren Längsdrähten 34 verbunden ist, die also unmittelbar bis an den Querdraht 32 heranreichen, werden insbesondere an dem außenseitigen Schenkel 46 Ausnehmungen 45 vorgesehen, siehe Fig.4. Dies ermöglicht es, die Aufnahmerinne 40 bis über einen Teilbereich der Längsdrähte 34 in die Gitterrinne 30 abzusenken. Des Weiteren können an diesem Schenkel 46 an den oberen freien Ende Einführschrägen 48 vorgesehen sein, die eine Verbindungsbildung erleichtern. Der innenseitige, der Gitterrinne 20 zugewandte Schenkel 47 der Aufnahmerinne 40 ist in der Regel länger als der außenseitige Schenkel 46, da seine Außenfläche als Verbindungsfläche zum Gitter dient und damit ausreichend Fläche beispielsweise für eine Schweißverbindung 50 vorhanden ist.

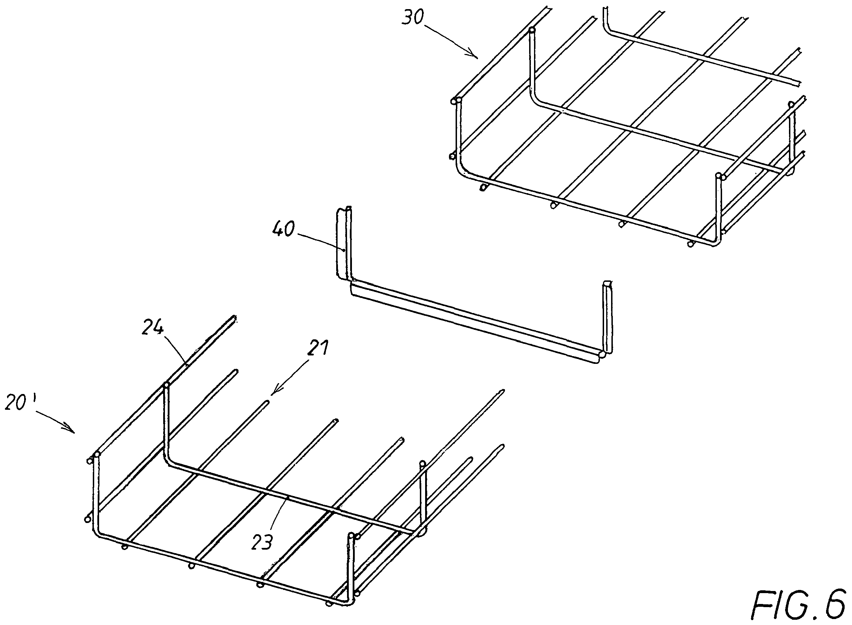

Bei dem bisher beschriebenen Beispiel wurde die Aufnahmerinne 40 als U-förmiges Teil an das geformte Metalldrahtgitter bzw. eine Blechrinne an ein ebenes Metalldrahtgitter angeschweißt. Eine weitere Möglichkeit zur Herstellung einer Gitterrinne 20' besteht darin, die bekannte Aufnahmerinne 40 stirnseitig an den freien Enden von Längsdrähten zu befestigen. Eine solche Verbindung ist ebenfalls möglich zwischen einer Blechrinne und dem ebenen Metalldrahtgitter, wie auch zwischen einer geformten Aufnahmerinne 40 und dem gebogenen Metalldrahtgitter, wie dies in Fig. 6 gezeigt wird.

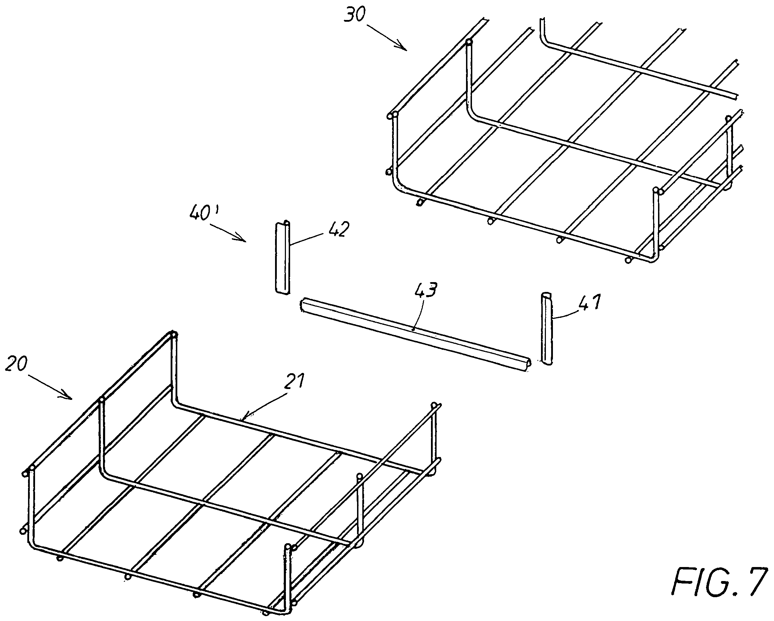

Fig. 7 zeigt eine weitere Ausführungsform. Hier besteht die Aufnahmerinne 40' aus drei unverbundenen Teilstücken 41, 42, 43, die einzeln mit dem hinteren Ende 21 der Gitterrinne 20 verbunden werden, entweder mit dem ebenen Metalldrahtgitter oder mit dem U-förmigen Metalldrahtgitter, wobei die Schweißverbindung der Teilstücke 41, 42, 43 stumpf an einem Querdraht oder auch stirnseitig an den Enden von Längsdrähten, wie oben beschrieben, vorgenommen werden kann. Es ergibt sich eine gleich gestaltete Gitterrinne 20, bei der die Teilstücke 41, 42, 43 der Aufnahmerinne 40' nicht miteinander verbunden sind. Die Verbindungsbildung mit der Gitterrinne 30 zu einer Gitterrinnenverbindung 10 wird in gleicher Weise vorgenommen und mit dem gleichen Ergebnis.

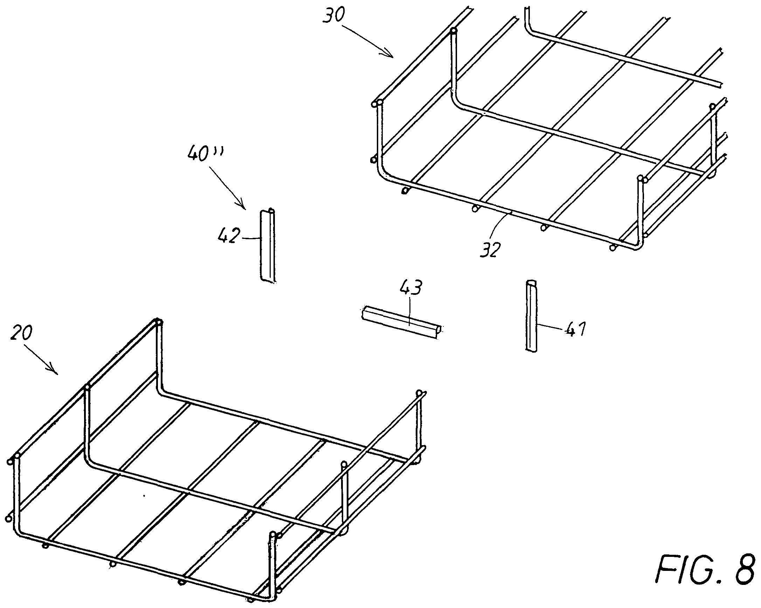

Fig. 8 zeigt ein weiteres Ausführungsbeispiel. In diesem Fall ist die Aufnahmerinne 40" ebenfalls aus unverbundenen Teilstücken 41, 42, 43 gestaltet. In diesem Fall ergibt sich jedoch ein Gitterrinne mit einer Aufnahmerinne 40", die nur abschnittsweise den endseitigen Querdraht 32 der benachbarten Gitterrinne 30 zur Bildung einer Gitterrinnenverbindung 10 umfasst. Die kurzen Teilstücke 41, 42, 43 können in der vorbeschriebenen Weise stoffschlüssig mit dem ebenen oder gebogenen Metalldrahtgitter verbunden werden.

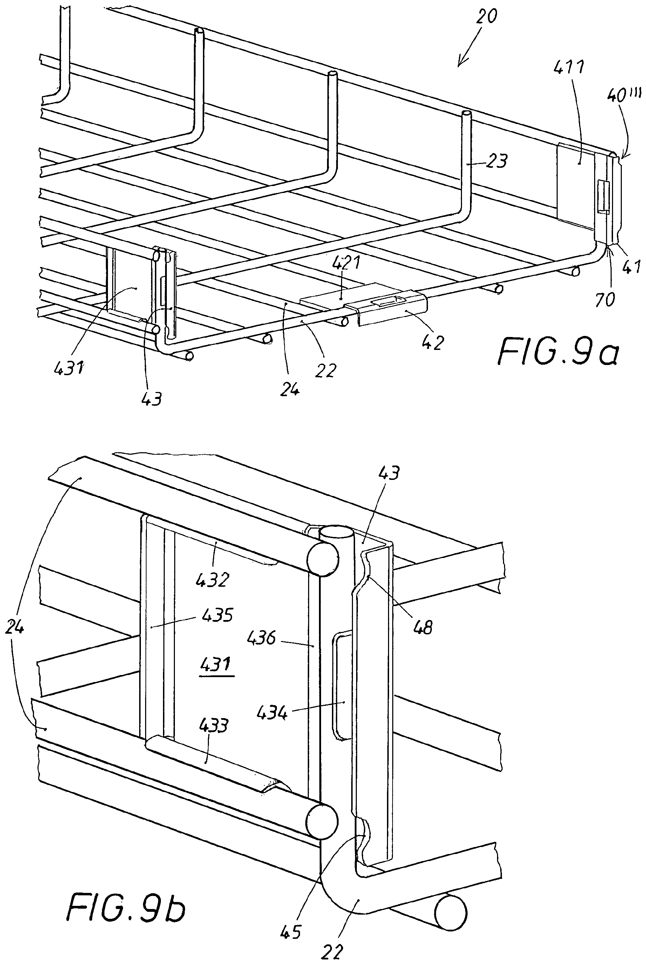

Fig. 9a und Fig. 9b zeigt ein nicht zur Erfindung gehörendes Ausführungsbeispiel. In diesem Fall ist die Aufnahmerinne 40"' ebenfalls aus unverbundenen Teilstücken 41, 42, 43 gestaltet. Die Gitterrinne 20 besitzt eine Aufnahmerinne 40"', die nur abschnittsweise den endseitigen Querdraht einer benachbarten Gitterrinne zur Bildung einer Gitterrinnenverbindung umfassen wird. Die kurzen Teilstücke 41, 42, 43 sind mit dem ebenen oder gebogenen Metalldrahtgitter durch Verpressen bzw. Verprägen verbunden worden. Für diese feste Verbindung sind die Teilstücke 41, 42, 43 zusätzlich mit einer Verbindungsplatte 411, 421, 431 einstückig ausgebildet. Die Verbindungsplatten 411, 421, 431 besitzen Mittel zur Verbindung der Teilstücke 41, 42, 43 mit den Längsdrähten 24 und/oder mit den Querdrähten 22, 23. In Fig. 9a und Fig. 9b ist eine Verbindung mit den Längsdrähten 24 und dem endseitigen Querdraht 22 gezeigt. Wie insbesondere aus Fig. 9b zu ersehen, besitzen die jeweiligen Verbindungsplatten 411, 421, 431 an zwei gegenüberliegenden Rändern Klemmarme 432, 433 zum Umfassen der Längsdrähte 24. Bei dem Verpressen mit dem Metalldrahtgitter werden die ursprünglich von der Verbindungsplatte 431 etwa senkrecht abstehenden Stege um die Längsdrähte 24 gelegt und zu Klemmarmen 432, 433 verformt. Zur besseren Positionierung der Teilstücke 41, 42, 43 während des Verbindungsprozesses mit dem Metalldrahtgitter ist die Verbindungsplatte 431 des Teilstücks 43 zusätzlich mit einem Positioniersteg 435 ausgerüstet, der das Teilstück 43 während des Verpressens in der vorgesehenen Lage hält. Dieser Positioniersteg 435 besteht aus einer Abbiegung der Verbindungsplatte 431 und greift zwischen zwei benachbarte Längsdrähte 24 in das Metalldrahtgitter ein.

Bei dem Beispiel in Fig. 9a und Fig. 9b ist zusätzlich eine Verbindung des Teilstücks 43 mit dem Querdraht 22 vorhanden. Da der Querdraht 22 an der Innenseite der Längsdrähte 24 angeordnet ist, besitzt die Verbindungsplatte 431 zur Aufnahme des Querdrahte 22 eine Versetzung 436, um eine Aufnahmerille für diesen Querdraht 22 zu bilden. Diese Aufnahmerille wird seitlich von einem senkrecht von der Verbindungsplatte 431 nach oben abragenden Steg 434 begrenzt. Dieser Steg 434 verhindert zudem beim Verbindungsprozess des Teilstücks 43 mit der Gitterrinne 20 ein unerwünschtes Verschieben des Teilstücks 43. An dem Teilstück 41, 43 ist eine Ausnehmung 45 vorgesehen, die bei Zusammensetzung zweier Gitterrinnen 20, 30 Platz für die Enden der Längsdrähte 34 der Gitterrinne 30 schafft. Ebenso wird das Zusammensetzen der Gitterrinnen 20, 30 zu einer Gitterrinnenanlage durch das Vorsehen der Einführschrägen 48 erleichtert.

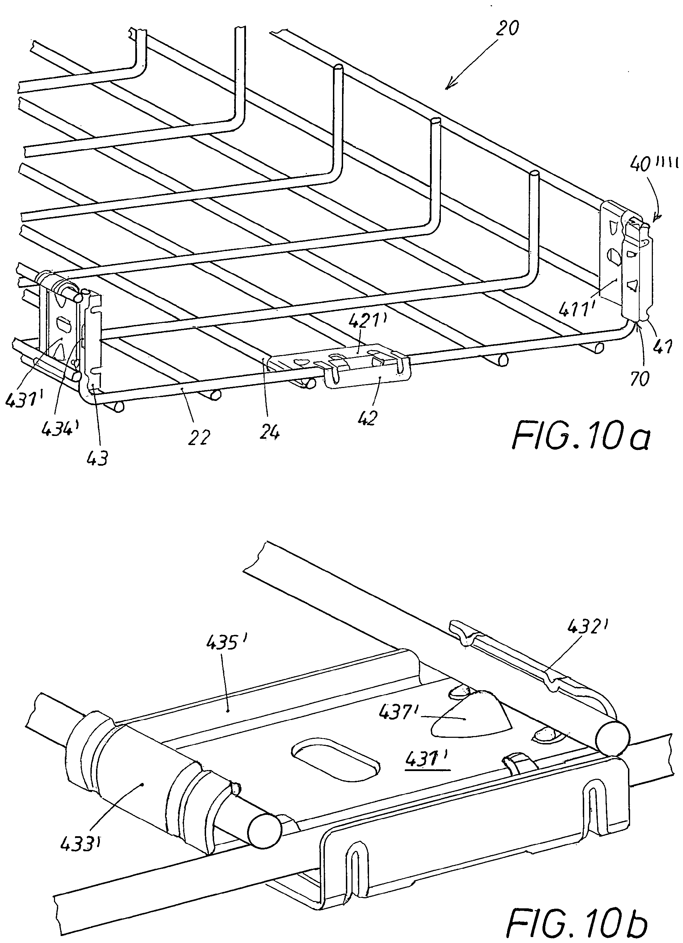

Fig. 10a und Fig. 10b zeigt ein nicht zur Erfindung gehörendes Ausführungsbeispiel. In diesem Fall ist die Aufnahmerinne 40"" in gleicher Weise aus unverbundenen Teilstücken 41, 42, 43 gestaltet. Für die feste Verbindung mit dem Metalldrahtgitter sind die Teilstücke 41, 42, 43 ebenfalls einstückig mit einer Verbindungsplatte 411', 421', 431' ausgebildet. Die Verbindungsplatte 431' ist vergrößert in Fig.10b dargestellt. Anders als in den Fig. 9a bzw. Fig. 9b werden die Längsdrähte 24 mit den Klemmarmen 432' und 433' von außen umfasst, wohingegen die Klemmarme 432, 433 bei dem Beispiel von Fig. 9a bzw. Fig. 9b zwischen die Längsdrähte 24 eingreifen und von innen gegen die Längsdrähte 24 verpresst sind. Für eine bessere und sichere Positionierung sind auch bei der Verbindungsplatte 431' ein Steg 434' und ein Positioniersteg 435' vorgesehen und zusätzlich Anschläge 437'. Diese Anschläge 437' sind in einfacher Weise aus der Verbindungsplatte 437' herausgeformt.

Die vorliegende Erfindung ist nicht auf die beschriebenen Ausführungsbeispiele beschränkt. Es sind vielmehr weitere Ausgestaltungen möglich. So können bei den Gitterrinnen 20, 30 die Querdrähte 22, 23 außenseitig angeordnet werden. In diesem Fall wird die Öffnung des Aufnahmekanals 44 der Aufnahmerinne 40 nach innen gerichtet sein, um den endseitigen Querdraht 32 aufzunehmen. Des Weiteren zeigen die Ausführungsbeispiele Gitterrinnen mit im wesentlichen senkrechten Teilstücken 41, 42 in vergleichbarer Ausrichtung zu den U-förmigen Schenkeln der Querdrähte 22, 32, d.h. es besteht ein annähernd rechter Winkel zwischen den Teilstücken 41, 42 und dem Teilstück 43. Dieser Winkel kann bedeutend größer sein, wenn auch die Gitterrinne keine senkrechten, sondern nach außen weisende schräge Seitenwände besitzt. Es sind vielmehr verschiedenartige Formen neben einer U-förmigen Gitterrinne möglich, wie beispielsweise L-Form, C-Form, V-Form oder andere wannenartige Alternativen. In jedem Fall ergibt sich eine Gitterrinnenverbindung auf einfache Weise durch Ineinanderstecken zweier benachbarter Gitterrinnen, die auf einfache Weise hergestellt sind und ohne separate Verbindungselemente eine Gitterrinnenverbindung ermöglichen.

Gezeigt wurden im Ausführungsbeispiel nur Gitterrinnen aus runden Längs- und Querdrähten, die jeweils die gleiche Drahtstärke aufweisen. Die Erfindung ist nicht auf solche Gitterrinnen beschränkt, sondern erstreckt sich auf Gitterrinnen mit unterschiedlichen Drahtstärken oder anderen Drahtform der Längs- und Querdrähte.

### Bezugszeichenliste

- 10: Gitterrinnenverbindung
- 20, 20': Gitterrinne
- 21: hintere Ende
- 22: endseitige Querdraht
- 23: Querdraht
- 24: Längsdraht
- 25: vordere Ende
- 26: Auflageraum
- 30: Gitterrinne
- 31: hintere Ende
- 32: endseitige Querdraht
- 33: Querdraht
- 34: Längsdraht
- 35: vordere Ende
- 3 6: Auflageraum
- 40, 40', 40", 40''', 40'''': Aufnahmerinne
- 41, 42, 43: Teilstück
- 411, 421, 431: Verbindungsplatte
- 411', 421', 431': Verbindungsplatte
- 432, 432'; 433, 433': Klemmarm
- 434, 434': Steg
- 435, 435': Positioniersteg
- 436: Versetzung
- 437': Anschlag
- 44: Aufnahmekanal
- 45: Ausnehmung
- 46, 47: Schenkel
- 48: Einführschräge
- 50: Schweißverbindung
- 60: Formschlußverbindung
- 70: Pressverbindung

## Patentansprüche

1. Gitterrinne aus einem geformten Metalldrahtgitter mit mehreren parallel zueinander angeordneten Längsdrähten (24) und mit mehreren Querdrähten (22, 23),
wobei sich innerhalb der Gitterrinne (20) ein rinnenförmiger Auflageraum (26) ergibt, bei dem alle Querdrähte (22, 23) innenliegend oder alle Querdrähte (22, 23) außenliegend angeordnet sind,
wobei die Gitterrinne (20) zwei unterschiedlich ausgestaltete Enden (21, 25) aufweist, wobei endseitig am vorderen Ende (25) der Gitterrinne (20) einer der Querdrähte (22) angeordnet ist und
dass zur Aufnahme eines endseitigen Querdrahts einer weiteren Gitterrinne endseitig am hinteren Ende (21) eine Aufnahmerinne (40, 40', 40", 40'", 40"") angeordnet ist, **dadurch gekennzeichnet, dass** eine stoffschlüssige Verbindung zwischen der Aufnahmerinne (40, 40', 40", 40'", 40"") und dem geformten Metalldrahtgitter vorliegt, wobei die Aufnahmerinne (40, 40', 40", 40''', 40'''') aus einer Blechrinne oder Teilstücken einer Blechrinne gebildet ist.

2. Gitterrinne nach Anspruch 1,**dadurch gekennzeichnet, dass** das Metalldrahtgitter und die Aufnahmerinne (40, 40', 40", 40"', 40"") U-förmig, L-förmig, V-förmig, C-förmig oder in eine ähnliche wannenförmige Form gebogen sind und die Aufnahmerinne (40, 40', 40", 40"', 40"") einen Aufnahmekanal (44) besitzt, dessen Öffnung nach außen, nämlich weg vom rinnenförmigen Auflageraum (26) oder dessen Öffnung nach innen zum rinnenförmigen Auflageraum (26), gerichtet ist.

3. Gitterrinne nach Anspruch 1 oder 2, **dadurch gekennzeichnet, dass** mindestens drei Teilstücke (41, 42, 43) eine Aufnahmerinne (40, 40', 40", 40'", 40"") bilden und jedes Teilstück (41, 42, 43) mit dem hinteren Ende (21) verbunden ist, wobei die Teilstücke (41, 42, 43) der Aufnahmerinne (40) nicht miteinander verbunden sind, nämlich aus beabstandeten Teilstücken (41, 42, 43) bestehen oder die Teilstücke (41, 42, 43) miteinander verbunden sind.

4. Gitterrinne nach Anspruch 1, **dadurch gekennzeichnet, dass** am hinteren Ende (21) kein Querdraht (22) vorgesehen ist und die Aufnahmerinne (40, 40', 40") mit den Enden der Längsdrähte (24) verbunden ist.

5. Gitterrinne nach einem der Ansprüche 1 bis 4, **dadurch gekennzeichnet, dass** der eine Schenkel (47) des Aufnahmekanals (44) der Aufnahmerinne (40, 40', 40", 40"', 40"") mit dem Metalldrahtgitter verbunden ist und der andere Schenkel (46) mehrere Ausnehmungen (45) besitzt, die an den Stellen der Aufnahmerinne (40, 40', 40") vorgesehen sind, wo gegenüberliegend am Schenkel (47) die Längsdrähte (24) enden.

6. Gitterrinnenverbindung zum Halten und Führen von Kabeln, Leitungen und/oder Rohren bestehend aus Gitterrinnen (20) nach einem der Ansprüche 1 bis 5, die unmittelbar miteinander verbunden sind,
wobei jede Gitterrinne aus einem geformten Metalldrahtgitter mit mehreren parallel zueinander angeordneten Längsdrähten (24; 34) und mit mehreren Querdrähten (22, 23; 32, 33) besteht,
so dass sich innerhalb des Gitterrinne (20, 30) ein rinnenförmigen Auflageraum (26, 36) für die Kabel, Leitungen und/oder Rohren ergibt, bei dem alle Querdrähte (22, 23; 32, 33) innenliegend oder alle Querdrähte außenliegend angeordnet sind,
wobei der endseitiger Querdraht (32) der einen Gitterrinne (30) in einer endseitigen Aufnahmerinne (40, 40', 40", 40"', 40"") der anderen Gitterrinne (20) gehalten ist und der Querschnitt des Auflageraumes der Gitterrinnenverbindung dem Querschnitt der Auflageräume (26, 36) der Gitterrinnen (20, 30) entspricht, so dass keine Überlappung von Bereichen des Metalldrahtgitters erfolgt.

7. Verfahren zur Herstellung einer Gitterrinne gemäß Anspruch 1, **dadurch gekennzeichnet, dass** ein Metalldrahtgitter mit mehreren Längsdrähten (24) und mit mehreren Querdrähten (22, 23) an einer Querseite mit einer aus mindestens einer Blechrinne bestehenden Aufnahmerinne (40, 40', 40", 40"', 40"") stoffschlüssig verbunden wird, anschließend das Metalldrahtgitter zusammen mit der Aufnahmerinne (40, 40', 40", 40"', 40"") gebogen wird, so dass sich innerhalb der Gitterrinne (20) ein rinnenförmigen Auflageraum (26) ergibt und sich eine Gitterrinne (20) mit zwei unterschiedlich ausgestaltete Enden (21, 25) ergibt, bei der endseitig am vorderen Ende (25) ein Querdraht (22) angeordnet ist und endseitig am hinteren Ende (21) eine Aufnahmerinne (40, 40', 40", 40"', 40"") angeordnet ist.

8. Verfahren nach Anspruch 7, **dadurch gekennzeichnet, dass** die Blechrinne mit einem Querdraht oder mit den Enden der Längsdrähte stoffschlüssig und/oder formschlüssig und/oder kraftschlüssig verbunden wird, vorzugsweise stumpf verschweißt, verklebt, verprägt oder verpresst wird.

9. Verfahren nach Anspruch 7 oder 8, **dadurch gekennzeichnet, dass** die gesamte Querseite des Metalldrahtgitters, die das hintere Ende (25) der herzustellenden Gitterrinne (20) bilden soll, mit einer durchgehenden Blechrinne verbunden wird, wobei beim Biegen unterschiedlich ausgerichtete Teilstücke (41, 42, 43) entstehen.

10. Verfahren nach Anspruch 9, **dadurch gekennzeichnet, dass** die Blechrinne an den vorgesehenen Abkantpunkten mit Einkerbungen, Einschnitten oder Wandschwächungen versehen wird.

11. Verfahren nach einem der Ansprüche 7 bis 10, **dadurch gekennzeichnet, dass** die Querseite des Metalldrahtgitters, die das hintere Ende (25) der herzustellenden Gitterrinne (20) bilden soll, mit mehreren Teilstücken (41, 42, 43) bildenden Blechrinnen verbunden wird, wobei beim Biegen die Blechrinnen nicht verformt werden.

## Claims

1. Mesh cable tray comprising a shaped metal wire mesh having a plurality of longitudinal wires (24) arranged parallel to one another and having a plurality of transverse wires (22, 23),
wherein a tray-shaped support space (26) results within the mesh cable tray (20), in which all transverse wires (22, 23) are arranged lying on the inside or all transverse wires (22, 23) are arranged lying on the outside,
wherein the mesh cable tray (20) has two differently shaped ends (21, 25),
whereby one of the transverse wires (22) is arranged at the face at the front end (25) of the mesh cable tray (20) and
with a receiving tray (40, 40', 40", 40''', 40'''') arranged at the rear end (21) at the end in order to receive an end transverse wire of a further mesh cable tray,
**characterised in that**
there is a material-locking connection between the receiving tray (40, 40', 40", 40'", 40"") and the shaped metal wire mesh,
wherein the receiving tray (40, 40', 40", 40"', 40"") is formed from a sheet metal tray or sections of a sheet metal tray.

2. A mesh cable tray according to claim 1, **characterised in that** the metal wire mesh and the receiving tray (40, 40', 40", 40'", 40"") is U-shaped, L-shaped, V-shaped, C-shaped or in a similar trough shape and the receiving tray (40, 40', 40", 40"', 40"") has a receiving channel (44) whose opening is directed towards the outside, namely away from the tray-shaped support space (26) or inwardly towards the tray-shaped support space (26).

3. Mesh cable tray according to claim 1 or 2, **characterised in that** at least three sections (41, 42, 43) form a receiving tray (40, 40', 40", 40"', 40"") and each section (41, 42, 43) is connected to the rear end (21), the sections (41, 42, 43) of the receiving tray (40) not being connected to one another, namely consisting of spaced sections (41, 42, 43) or the sections (41, 42, 43) being connected to one another.

4. Mesh cable tray according to claim 1, **characterised in that** no transverse wire (22) is provided at the rear end (21) and the receiving tray (40, 40', 40") is connected to the ends of the longitudinal wires (24).

5. Mesh cable tray according to one of claims 1 to 4, **characterised in that** one leg (47) of the receiving channel (44) of the receiving tray (40, 40', 40", 40"', 40"") is connected to the metal wire mesh and the other leg (46) has a plurality of recesses (45) which are provided at the points of the receiving tray (40, 40', 40") where the longitudinal wires (24) end opposite one another at the leg (47).

6. Mesh cable tray connection for holding and guiding cables, conduits and/or pipes, consisting of mesh cable trays (20) according to one of claims 1 to 5, which are directly connected to one another,
wherein each mesh cable tray consists of a shaped metal wire mesh having a plurality of longitudinal wires (24; 34) arranged parallel to one another and having a plurality of transverse wires (22, 23; 32, 33),
so that a tray-shaped support space (26, 36) for the cables, conduits and/or pipes is produced inside the mesh cable tray (20, 30), in which all the transverse wires (22, 23; 32, 33) are arranged on the inside, or all the transverse wires are arranged on the outside,
wherein the end-side transverse wire (32) of one mesh cable tray (30) is held in an end-side receiving tray (40, 40', 40", 40'", 40"") of the other mesh cable tray (20) and the cross-section of the support space of the mesh cable tray connection corresponds to the cross-section of the support spaces (26, 36) of the mesh cable trays (20, 30) so that there is no overlap of regions of the metal wire mesh.

7. Method for producing a mesh cable tray according to claim 1, **characterised in that** a metal wire mesh with a plurality of longitudinal wires (24) and with a plurality of transverse wires (22, 23) on a transverse side is materially connected to a receiving tray (40, 40', 40", 40"', 40"") consisting of at least one sheet metal tray, followed by the metal wire mesh being bent together with the receiving tray (40, 40', 40", 40'", 40"") so that within the mesh cable tray (20) a tray-shaped support space (26) results together with a mesh cable tray (20) with two differently formed ends (21, 25), whereby at the end of the front end (25) a transverse wire (22) is arranged and at the end of the rear end (21) a receiving tray (40, 40 ', 40 ", 40''', 40'''').

8. Method according to claim 7, **characterised in that** the sheet metal tray is connected, preferably butt-welded, glued, embossed or pressed, with a material-locking and/or positive-locking and/or force-locking connection with a transverse wire or with the ends of the longitudinal wires.

9. Method according to claim 7 or 8, **characterised in that** the entire transverse side of the metal wire mesh, which is to form the rear end (25) of the mesh cable tray (20) to be produced, is connected to a continuous sheet-metal tray, wherein differently aligned sections (41, 42, 43) are produced during bending.

10. Method according to claim 9, **characterised in that** the sheet metal tray is provided with notches, incisions or wall weakening at the provided folding points.

11. A method according to one of claims 7 to 10, **characterised in that** the transverse side of the metal wire mesh, which is to form the rear end (25) of the mesh cable tray (20) to be produced, is connected to a plurality of sheet metal trays forming sections (41, 42, 43), with the sheet metal trays not being deformed during bending.

## Revendications

1. Rigole grillagée issue d'une grille en fil métallique formé composée de plusieurs fils longitudinaux (24) disposés mutuellement parallèles, et de plusieurs fils transversaux (22, 23),
sachant que l'intérieur de la rigole grillée (20) donne un volume d'appui (26) en forme de rigole, volume pour lequel tous les fils transversaux (22, 23) sont disposés à l'intérieur ou tous les fils transversaux (22, 23) sont disposés à l'extérieur,
sachant que la rigole grillagée (20) présente deux extrémité (21, 25) différemment configurées,
sachant qu'en bout l'un des fils transversaux (22) est disposé à l'extrémité avant (25) de la rigole grillagée (20) et que
pour recevoir un fil transversal d'extrémité d'une rigole grillagée supplémentaire une rigole réceptacle (40, 40', 40", 40"', 40"") est disposée en bout à l'extrémité arrière (21),
**caractérisée en ce qu'**il
y a présence d'une jonction par adhérence de matières entre la rigole réceptacle (40, 40', 40", 40'", 40"") et la grille en fil métallique formé,
sachant que la rigole réceptacle (40, 40', 40", 40'", 40"") est formée à partir d'une rigole en tôle ou de parties d'une rigole en tôle.

2. Rigole grillagée selon la revendication 1, **caractérisée en ce que** la grille en fil métallique et la rigole réceptrice (40, 40', 40", 40"', 40"") sont coudées en forme de U, de L, de V, de C ou en forme de cuvette similaire, et que la rigole réceptrice (40, 40', 40", 40'", 40"") possède un canal réceptacle (44) dont l'ouverture est orientée vers l'extérieur, à savoir s'éloignant du volume d'appui (26) en forme de rigole, ou dont l'ouverture est orientée vers l'intérieur, en direction du volume d'appui (26) en forme de rigole.

3. Rigole grillagée selon la revendication 1 ou 2, **caractérisée en ce qu'**au moins trois parties (41, 42, 43) forment une rigole réceptacle (40, 40', 40", 40'", 40"") et que chaque partie (41, 42, 43) est reliée avec l'extrémité arrière (21), sachant que les parties (41, 42, 43) de la rigole réceptacle (40) ne sont pas reliées entre elles, à savoir qu'elles se composent de parties (41, 42, 43) distantes les unes des autres, ou que les parties (41, 42, 43) sont reliées entre elles.

4. Rigole grillagée selon la revendication 1, **caractérisée en ce que** contre l'extrémité arrière (21) n'est prévu aucun fil transversal (22) et que la rigole réceptacle (40, 40', 40") est reliée avec les extrémités des fils longitudinaux (24).

5. Rigole grillagée selon l'une des revendications 1 à 4, **caractérisée en ce qu'**une branche (47) du canal réceptacle (44) de la rigole réceptacle (40, 40', 40", 40'", 40"") est reliée avec la grille en fil métallique et que l'autre branche (46) possède plusieurs évidements (45) prévus aux endroits de la rigole réceptrice (40, 40', 40") où, en face sur la branche (47), se terminent les fils longitudinaux (24).

6. Raccord pour rigole grillagée destiné à retenir et guider des câbles, lignes et/ou conduites, composé de rigoles grillagées (20) selon l'une des revendications 1 à 5 qui sont directement reliées entre elles,
sachant que chaque rigole grillagée se compose d'une grille en fil métallique formé composée de plusieurs fils longitudinaux disposés mutuellement parallèles (24 ; 34) et de plusieurs fils transversaux (22, 23 ; 32, 33),
de sorte qu'à l'intérieur de la rigole grillagée (20, 30) résulte un volume d'appui (23, 36) en forme de rigole pour les câbles, lignes et/ou conduites, volume pour lequel tous les fils transversaux (22, 23 ; 32, 33) sont disposés à l'intérieur ou pour lequel tous les fils transversaux sont disposés à l'extérieur,
sachant que le fil transversal (32) à l'extrémité d'une rigole grillagée (30) est retenu dans une rigole réceptacle (40, 40', 40", 40'", 40"") à l'extrémité de l'autre rigole grillagée (20) et que la section du volume d'appui du raccord de rigole grillagée correspond à la section des volumes d'appui (26, 36) des rigoles grillagées (20, 30), de sorte qu'il n'y a pas de chevauchement de zones de la grille en fil métallique.

7. Procédé de fabrication d'une rigole grillagée selon la revendication 1, **caractérisé en ce qu'**une grille en fil métallique composée de plusieurs fils longitudinaux (24) et de plusieurs fils transversaux (22, 23) est reliée sur un côté transversal, par adhérence de matières, avec une rigole réceptacle (40, 40', 40", 40"', 40"") composée d'au moins une rigole en tôle, qu'ensuite la grille en fil métallique est coudée avec la rigole réceptacle (40, 40', 40", 40'", 40"") de sorte à donner à l'intérieur de la rigole grillagée (20) un volume d'appui (26) en forme de rigole et à donner une rigole grillagée (20) présentant deux extrémités (21, 25) différemment configurées, pour laquelle en bout un fil transversal (22) est disposé à l'extrémité avant (25) et pour laquelle en bout une rigole réceptacle (40, 40', 40", 40"', 40"") est disposé à l'extrémité arrière (21).

8. Procédé selon la revendication 7, **caractérisé en ce que** la rigole en tôle est reliée avec un fil transversal ou avec les extrémités des fils longitudinaux par adhérence de matières et/ou par adhérence de formes et/ou par adhérence de forces, de préférence soudée bord à bord, collée, emboutie ou sertie.

9. Procédé selon la revendication 7 ou 8, **caractérisé en ce que** tout le côté transversal de la grille en fil métallique, côté qui doit former la partie arrière (25) de la rigole grillagée (20) à fabriquer, est relié avec une rigole en tôle continue, sachant que lors du coudage sont créées des parties (41, 42, 43) différemment orientées.

10. Procédé selon la revendication 9, **caractérisé en ce que** la rigole en tôle est, aux points relevage des bords, munie d'entailles, d'incisions ou de fragilisations des parois.

11. Procédé selon l'une des revendications 7 à 10, **caractérisé en ce que** le côté transversal de la grille en fil métallique, côté qui doit former la partie arrière (25) de la rigole grillagée (20) à fabriquer, est reliée avec plusieurs rigoles en tôle formant plusieurs parties (41, 42, 43), sachant que lors du coudage les rigoles en tôle ne sont pas déformées.
